(19) **Europäisches Patentamt / European Patent Office / Office européen des brevets**

(11) **EP 1 802 060 A2**

(12) **EUROPEAN PATENT APPLICATION**

(43) Date of publication:
**27.06.2007 Bulletin 2007/26**

(51) Int Cl.:
**H04L 25/02** *(2006.01)*

(21) Application number: **06026593.1**

(22) Date of filing: **21.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **26.12.2005 KR 20050129328**

(71) Applicant: **LG - Nortel Co., Ltd.**
**679, Yeoksam-dong**
**Gangnam-gu**
**Seoul (KR)**

(72) Inventors:
• **Kim, Joong, Seop**
**Seongbuk-gu**
**Seoul 136-034 (KR)**
• **Chung, Kwang, Soon**
**Anyang-si**
**Gyeonggi-do 431-086 (KR)**

(74) Representative: **Katérle, Axel**
**Wuesthoff & Wuesthoff**
**Patent- und Rechtsanwälte**
**Schweigerstraße 2**
**81541 München (DE)**

(54) **Apparatus and method for transmitting multi-carrier signals**

(57) Embodiments of the present invention may provide an apparatus and a method for transmitting a multi-carrier signal, the multi-carrier signal being generated by modulating a received digital signal. The received digital signal may be modulated to a first multi-carrier signal and a second multi-carrier signal. The first multi-carrier signal and the second multi-carrier signal may be combined to generate a combined multi-carrier signal, wherein the second multi-carrier signal is generated to have a same phase with a combined multi-carrier signal.

FIG. 2

**Description**

## BACKGROUND

The present application claims priority from Korean Patent Application No. 10-2005-129328, filed December 26, 2005, the subject matter of which is incorporated herein by reference.

## BACKGROUND

### 1. Field

Embodiments of the present invention may relate to a mobile communication apparatus and method. More particularly, embodiments of the present invention may relate to an apparatus and method for transmitting a multi-carrier signal in a mobile communication system.

### 2. Background

The Universal Mobile Telecommunication System (UMTS) network may enable mobile phones or computers in compliance with 3rd Generation Partnership Project (3GPP) to transmit data at a speed of more than 2Mbps in the network. Data communicated within the network may include packet-based text for the 3rd Generation or Wireless Broadband, or digitalized audio, video or multimedia data. In other words, users on a trip may seamlessly connect to the Internet using their mobile phones or computers and may be provided with the same services anywhere in the UMTS network. The UMTS network may provide such services by using territorial wireless technologies in combination with satellite transmission technologies.

The UMTS network may include Node-Bs for transmitting/receiving wireless data to and from the mobile terminals as well as for processing wireless data, Radio Network Controllers (RNCs) and Core Networks. The components of the UMTS network are provided with transmitting equipment for transmitting the Radio Frequency (RF) signals.

## BRIEF DESCRIPTION OF THE DRAWINGS

Arrangements and embodiments may be described in detail with reference to the following drawings in which like reference numerals refer to like elements and wherein:

FIG. 1 illustrates a transmitting apparatus for a 3 GPP mobile communication system according to an example arrangement;

FIG. 2 illustrates a transmitting apparatus according to an example embodiment of the present invention;

FIG. 3 illustrates a second multi-carrier transmitter according to an example embodiment of the present invention; and

FIG. 4 illustrates a flow chart for a transmitting method according to an example embodiment of the present invention.

## DETAILED DESCRIPTION

A detailed description may be provided with reference to the accompanying drawings. One of ordinary skill in the art may realize that the following description is illustrative only and is not in any way limiting. Other embodiments of the present invention may readily suggest themselves to such skilled persons having the benefit of this disclosure.

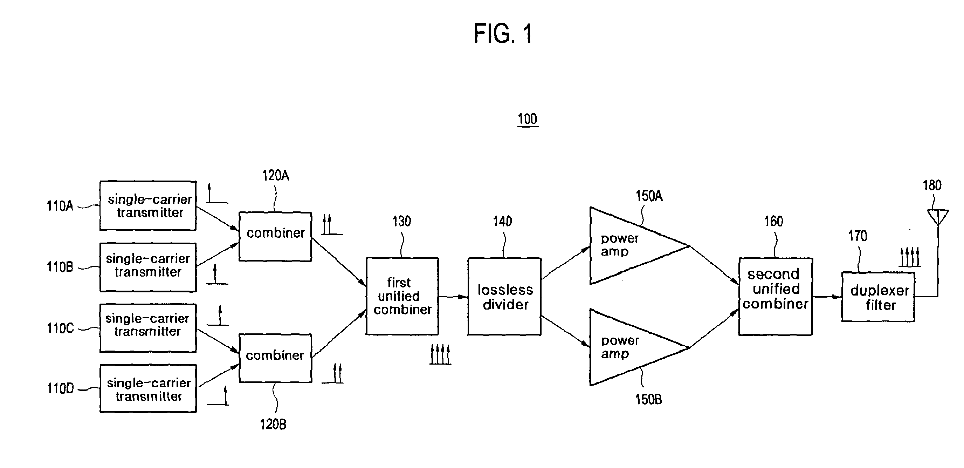

FIG. 1 illustrates a transmitting apparatus for a 3GPP mobile communication system according to an example arrangement. Other arrangements may also be used. As shown in FIG. 1, a transmitting apparatus 100 may include a plurality of single-carrier transmitters 110A-110D, a plurality of combiners 120A and 120B, a first unified combiner 130, a lossless divider 140, a plurality of power amplifiers 150A (labeled power amp) and 150B (labeled power amp), a second unified combiner 160, a duplexer filter 170 and an antenna 180.

The single-carrier transmitters 110A-110D may receive a baseband digital signal from a modem (not shown) and modulate the received baseband digital signal to generate an RF single-carrier signal. The generated RF signal may have a spectrum band of carrier frequency as shown in FIG. 1. Each of the combiners 120A and 120B may receive RF signals from two of the single-carrier transmitters 110A-110D. For example, the combiner 120A receives RF signals from the single-carrier transmitters 110A and 110B, and the combiner 120B may receive RF signals from the single-carrier transmitters 110C and 110D.

Each of the combiners 120A and 120B combine the received signals to generate a combined signal. The first unified combiner 130 receives combined signals from the combiners 120A and 120B and combines the combined signals to generate a unified combined signal. The combiners 120A and 120B and the first unified combiner 130 may be combiners for small signals.

The lossless divider 140 receives the unified combined signal from the first unified combiner 130 and divides the unified combined signal. Each of the amplifiers 150A and 150B receives one of the divided signals from the lossless divider 140 and amplifies the received signal to a predetermined level. The second unified combiner 160 receives the amplified signals from the amplifiers 150A and 150B, and combines the received signals to generate a second unified combined signal. The second unified combiner 160 is a type of combiner for large signals. The duplexer filter 170 receives the second unified combined signal from the second unified combiner 160, performs filtering on the received signal by using predetermined coefficients and transmits the filtered signal to, for example, relaying apparatuses or mobile terminals via the antenna 180.

The received signals from the amplifiers 150A and 150B may be required to have a same phase in order to combine the signals without losing power. This is because the second unified combiner 160 of the transmitting apparatus 100 is configured for large signals. If the received signals from the amplifiers 150A and 150B are combined with a phase difference, then a large quantity of heat generation and power loss may result. For example, combining two signals with a power of 60W may result in an output power of 120W only if the two combined signals have a same phase. If the phases of the two signals are different from each other, then the above combination of two signals with a power of 60W may cause 3dB loss of total power (i.e., half power loss) due to heat generation so that the power of the combined signals is only 60W. The transmitting apparatus may not be provided with a means for appropriately complementing the power loss. Accordingly, the transmitting apparatus may encounter problems associated with such power loss due to phase difference. The power of the combined signal may not satisfy the required transmitting power due to the loss. Thus, additional power may be needed to complement the power loss, which may compromise the operational efficiency and stability of the transmitting apparatus.

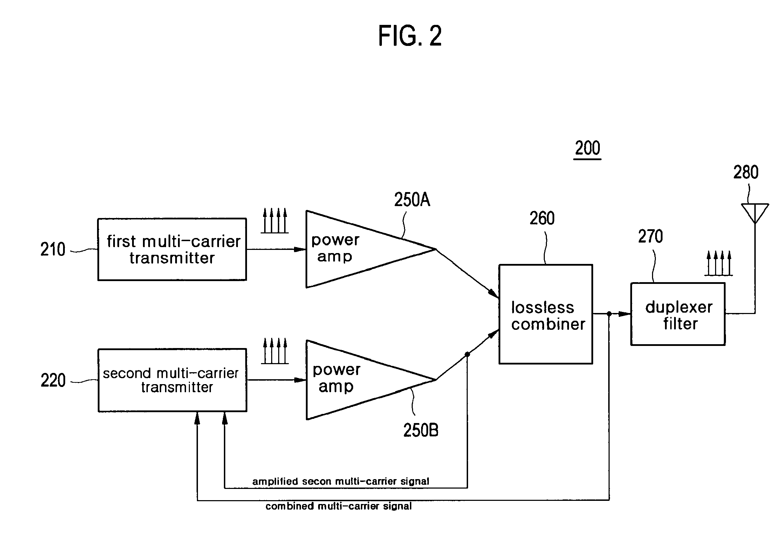

FIG. 2 illustrates a transmitting apparatus according to an example embodiment of the present invention. Other embodiments and configurations are also within the scope of the present invention. As shown in FIG. 2, a transmitting apparatus 200 may include a first multi-carrier transmitter 210, a second multi-carrier transmitter 220, two power amplifiers 250A and 250B, a lossless combiner 260, a duplexer filter 270 and an antenna 280.

The first multi-carrier transmitter 210 may receive a baseband digital signal from a modem (not shown) and modulate the received baseband digital signal in order to generate a first multi-carrier signal. The generated first multi-carrier signal $f(n)$ may be depicted by the following Equation 1:

$$f(n) = \sum_{i=1}^{M} f_i(n)$$,

wherein, M is a number of carriers used to generate a multi-carrier signal. For example, M may be 4 as shown in FIG 2. $f_i(n)$ is an i'th carrier signal and may be depicted by the following Equation 2:

$$f_i(n) = B\{L\{C\{(I_i(n)+j*Q_i(n))\} \\ * \cos(2\pi f_{oi}n) - \sin(2\pi f_{oi}n)\} \\ * \cos(2\pi f_c n) - \sin(2\pi f_c n)\}$$

wherein, $I_i(n)$ is an n'th signal of digital I channel to be transmitted via the i'th carrier and $Q_i(n)$ is the n'th signal of digital Q channel to be transmitted via the i'th carrier. Additionally, $f_c$ is a reference carrier frequency and $f_{oi}$ is an offset frequency of i'th carrier to the reference carrier frequency $f_c$. For example, assuming that a frequency of the first carrier is 2165 MHz, the frequency of the second carrier is 2155 MHz and the reference carrier frequency $f_c$ is 2160 MHz. In such a case, $f_{o1}$ is 5 MHz and $f_{o2}$ is -5 MHz. C{} is a band limit function, which may include a channel filter. In a UMTS network, C{} is a root raised cosine (RRC) filter, L{} is a low pass filer (LPF) and B{} is a band pass filter (BPF). The i'th carrier signal $f_i(n)$ is only one example as depicted in Equation 2 and embodiments of the present invention are not limited thereto.

The second multi-carner transmitter 220 may receive a baseband digital signal from a modem (not shown) and modulate the received baseband digital signal to generate a second multi-carrier signal. The form of the generated second multi-carrier signal may be similar to the form of the first multi-carrier signal $f(n)$. The second multi-carrier transmitter 220 may operate such that the second multi-carrier signal inputted to the combiner 260 (e.g., the output signal of the amplifier 250B) and the combined multi-carrier signal generated in the combiner 260 have a same phase.

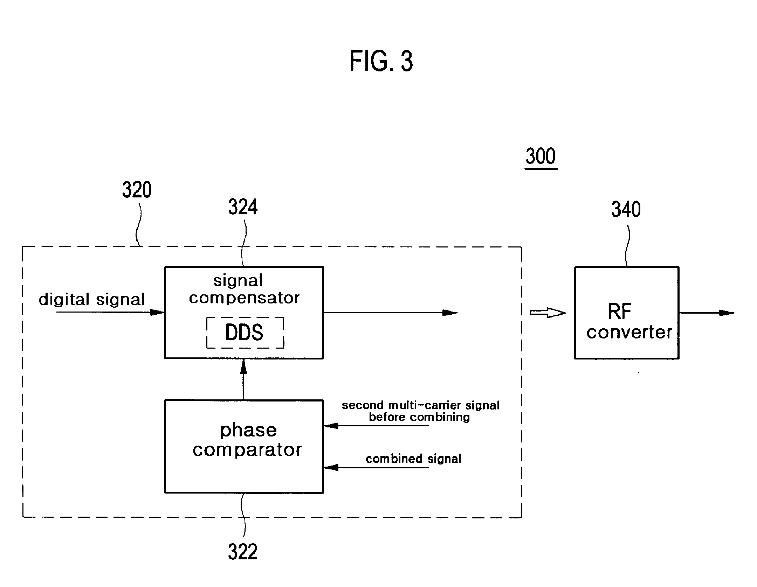

Operations of the second multi-carrier transmitter 220 will be described with reference to FIG. 3.

FIG. 3 illustrates a second multi-carrier transmitter according to an example embodiment of the present invention. Other embodiments and configurations are also within the scope of the present invention. The second multi-carrier transmitter shown in FIG. 3 may correspond to the second multi-carrier transmitter 220 shown in FIG. 2. A second multi-carrier transmitter 300 may include at least one phase compensator 320 and one RF converter 340. A number of the phase compensators 320 of the second multi-carrier transmitter 300 may be the same as a number of the carriers used to generate the multi-carrier signal. The phase delay of each carrier signal may vary depending on the carrier frequency although each carrier signal may pass through a same channel. Therefore, the phase of each carrier signal may be compensated. The phase compensator 320 may include a phase comparator 322 and a signal compensator 324. The phase comparator 322 may receive the second multi-carrier signal inputted to the lossless combiner 260 (e.g., the output signal of the amplifier 250B) and the output signal of the combiner 260 by feedback. The phase comparator 322 may detect a phase difference between the two received signals. According to at least this embodiment, the phase comparator 322 for the i'th carrier signal may include a LPF L{}and may convert a frequency band of the two received signals into an offset frequency of the i'th carrier to detect a phase difference of the i'th carrier signal.

The signal compensator 324 may receive the detected phase difference from the phase comparator 322 and adjust the phase of the corresponding carrier signal of the generated second multi-carrier signal in a compensation direction. For example, if the phase difference detected in the phase comparator 322 is plus (advanced), then the phase of the generated corresponding carrier signal is adjusted in a minus direction. However, if the phase difference is minus (postponed), then the phase of the generated corresponding carrier signal is adjusted in a plus direction.

The signal compensator 324 may also include a direct digital synthesizer (DDS). The DDS may receive the detected phase difference from the phase comparator 324 and compensate the phase of the generated corresponding carrier signal. Detailed operations of the DDS is described in a product specification document of www.xilinx.com, the subject matter of which is incorporated herein by reference, and is thus omitted from the present application.

The RF converter 340 may receive each carrier signals in which the phase is compensated, from the phase compensator 320. The RF converter 340 may then converts their frequency band to a reference frequency $f_c$ band and combine them to generate the second multi-carrier signal.

As shown in FIG. 2, the power amplifiers 250A and 250B may receive the first and second multi-carrier signals from the first and second multi-carrier transmitters 210 and 220 and amplify the received signals to a predetermined level. For example, the power amplifiers 250A and 250B may amplify the received signals at different levels for each carrier. The lossless combiner 260 may receive the amplified first and second multi-carrier signals from the power amplifiers 250A and 250B and combine the received signals. An input signal of the lossless combiner 260 (i.e., the amplified second multi-carrier signal) and the output signal of the lossless combiner 260 (i.e., the combined multi-carrier signal) are transferred to the second multi-carrier transmitter by feedback.

The transferred signals may be used to compensate a phase of the second multi-carrier signal to be generated as described above with reference to FIG. 3. As such, according to this embodiment, heat generation and power loss due to a phase difference when the signals are combined in the transmitting apparatus can be remarkably reduced since the second multi-carrier signal inputted to the combiner 260 and the combined multi-carrier signal generated in the combiner 260 are transferred to the second multi-carrier transmitter 220 by feedback. This is to compensate the phase of the second multi-carrier signal generated in the second multi-carrier transmitter 220 such that the two feedback signals have a same phase. According to at least this embodiment, one problem of the power of the combined multi-carrier signal becoming lower than the required transmitting power due to the combination loss caused by the phase difference can be prevented (or reduced). Thus, there is no need to provide excess power against the combination loss, thereby efficiently operating the transmitting apparatus.

The duplexer filter 270 may receive the combined multi-carrier signal from the lossless combiner 260, filter the received signal by predetermined coefficients and transmit the filtered signal over the antenna 280. The predetermined coefficients may include the coefficients for removing a noise signal over the channel. In a frequency division duplex (FDD) scheme, the predetermined coefficients may include coefficients for preventing the signal of the transmitting channel from transferring to the receiving channel since the frequency band of the transmitting channel is different than the frequency band of the receiving channel.

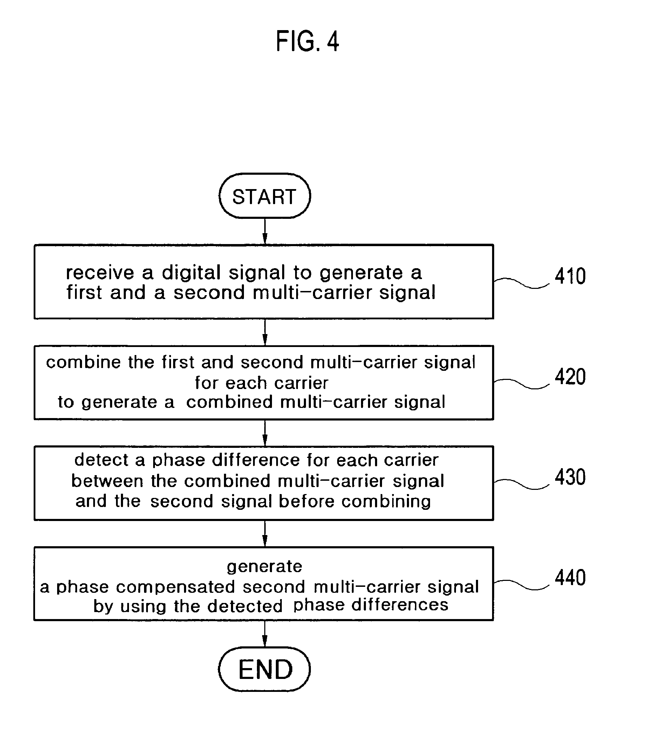

FIG. 4 illustrates a flow chart for a transmitting method according to an example embodiment of the present invention. Other operations, orders of operations and configurations are also within the scope of the present invention. In operation 410, in response to receiving a digital signal, a first multi-carrier signal and a second multi-carrier signal are generated. As shown in FIG. 2, the first and second multi-carrier signals may be generated in the first and second multi-carrier transmitters 210 and 220, respectively, in response to receiving a digital signal. The first and second multi-carrier signals may be amplified and combined for each carrier to generate a combined multi-carrier signal (operation 420). As shown in FIG. 2, the first and second multi-carrier signals may be amplified in the power amplifiers 250A and 250B, respectively. Then, the amplified first and second multi-carrier signals are inputted to the lossless combiner 260 and amplified to generate the combined multi-carrier signal.

In operation 430, a phase difference between the combined multi-carrier signal and the second multi-carrier signal used to generate the combined multi-carrier signal is detected for each carrier. As shown in FIG. 3, the combined multi-carrier signal generated in the combiner 260 and the second multi-carrier signal inputted to the combiner 260 may be inputted to the phase comparator 322 of the second multi-carrier transmitter 300 by feedback. The phase difference may be detected for each carrier by using the feedback signals in the phase comparator 322 as shown in FIG. 3. Then, in operation 440, the detected phase difference is used to compensate a phase of the second multi-carrier signal for each carrier and a phase-compensated second multi-carrier signal is generated. As shown in FIG. 3, the phase of the second multi-carrier signal to be generated may be compensated for each carrier in the signal compensator 324 based on the phase difference. In response to receiving the phase-compensated carriers, the RF converter 340 may generate the phase-compensated multi-carrier signal. As shown in FIG. 3, the signal compensator 324 may include the DDS for compensating the phase difference.

According to at least this embodiment, the transmitting method 400 may further include filtering the combined multi-carrier signal by a duplexer filter and transmitting the combined multi-carrier signal via an antenna (not shown). As shown in FIG. 2, in response to receiving the combined multi-carrier signal from the combiner 260, the duplexer filter 270 may perform filtering for removing a noise and transmit the filtered signal via the antenna 280.

An embodiment may be achieved in whole or in part by an apparatus that includes a first multi-carrier transmitter configured to modulate the received digital signal into a first multi-carrier signal, a second multi-carrier transmitter configured to modulate the received digital signal into a second multi-carrier signal, and a combiner configured to combine the first multi-carrier signal and the second multi-carrier signal to generate a combined multi-carrier signal. The second multi-carrier transmitter may be further configured to operate such that the second multi-carrier signal inputted to the combiner and the combined multi-carrier signal generated in the combiner have a same phase.

A second multi-carrier transmitter may be further configured to receive the combined multi-carrier signal from the combiner by feedback. Further, the second multi-carrier transmitter may be configured to operate to compensate a phase of the second multi-carrier signal by using a phase difference between the combined multi-carrier signal and the second multi-carrier signal.

Another embodiment may be achieved in whole or in part by a method that includes modulating the received digital signal to generate a first multi-carrier signal and a second multi-carrier signal, combining the first multi-carrier signal and the second multi-carrier signal to generate a combined multi-carrier signal, and compensating a phase of the second multi-carrier signal such that the second multi-carrier signal used to generate the combined multi-carrier signal and the combined multi-carrier signal have a same phase.

Compensating the phase of the second multi-carrier signal may include compensating the phase of the second multi-carrier signal by using a phase difference between the combined multi-carrier signal and the second multi-carrier signal used to generate the combined multi-carrier signal.

Another embodiment may be achieved in whole or in part by a machine-readable medium having stored thereon data representing sequences of instructions, when executed by a processor, cause the processor to performing operations that include modulating the received digital signal to generate a first multi-carrier signal and a second multi-carrier signal, combining the first multi-carrier signal and the second multi-carrier signal to generate a combined multi-carrier signal, and compensating a phase of the second multi-carrier signal such that the second multi-carrier signal used to generate the combined multi-carrier signal and the combined multi-carrier signal have a same phase.

While embodiments of the present invention and its various functional components may have been described in particular embodiments, it should be appreciated that embodiments of the present invention can be implemented in hardware, software, firmware, middleware or a combination thereof and utilized in systems, subsystems, components or sub-components thereof. When implemented in software, elements of embodiments of the present invention may include instructions/code segments for performing tasks. The program or code segments can be stored in a machine readable medium, such as a processor readable medium or a computer program product, or transmitted by a computer data signal embodied in a carrier wave, or a signal modulated by a carrier, over a transmission medium or communication link. The machine-readable medium or processor-readable medium may include any medium that can store or transfer information in a form readable and executable by a machine (e.g., a processor, a computer, etc.).

Further, while embodiments of the present invention have been shown and described with respect to an embodiment, those skilled in the art will recognize that various changes and modifications may be made without departing from the spirit and scope of the invention as defined in the appended claims.

**Claims**

1. An apparatus for transmitting a multi-carrier signal generated by modulating a received digital signal, comprising:

a first multi-carrier transmitter to modulate the received digital signal into a first multi-carrier signal;

a second multi-carrier transmitter to modulate the received digital signal into a second multi-carrier signal; and a combiner to combine the first multi-carrier signal and the second multi-carrier signal and to generate a combined multi-carrier signal,

wherein the second multi-carrier transmitter operates such that the second multi-carrier signal inputted to the combiner and the combined multi-carrier signal generated in the combiner have a same phase.

2. The apparatus of claim 1, wherein the second multi-carrier transmitter receives the combined multi-carrier signal from the combiner by feedback, and the second multi-carrier transmitter compensates a phase of the second multi-carrier signal based on a phase difference between the combined multi-carrier signal and the second multi-carrier signal.

3. The apparatus of claim 2, wherein the second multi-carrier transmitter includes a Direct Digital Synthesizer (DDS), the DDS to compensate the phase of the second multi-carrier signal based on the phase difference.

4. The apparatus of claim 1, further comprising:

a first power amplifier to receive the first multi-carrier signal and to amplify a power of the received first multi-carrier signal; and
a second power amplifier to receive the second multi-carrier signal and to amplify a power of the received second multi-carrier signal,

wherein the combiner combines the amplified first multi-carrier signal and the amplified second multi-carrier signal to generate a combined multi-carrier signal, and the second multi-carrier transmitter operates such that the amplified second multi-carrier signal and the combined multi-carrier signal have the same phase.

5. The apparatus of claim 4, wherein the second multi-carrier transmitter receives the combined multi-carrier signal from the combiner by feedback and receives the amplified second multi-carrier signal from the second power amplifier by feedback, and the second multi-carrier transmitter compensates a phase of the second multi-carrier signal based on a phase difference between the combined multi-carrier signal and the amplified second multi-carrier signal.

6. An apparatus for transmitting a multi-carrier signal, comprising:

a first multi-carrier transmitter to provide a first multi-carrier signal based on a received digital signal;
a second multi-carrier transmitter to provide a second multi-carrier signal based on a received digital signal; and
a combiner to provide a combined multi-carrier signal based on the first multi-carrier signal and the second multi-carrier signal,

wherein the second multi-carrier signal has a same phase as the combined multi-carrier signal.

7. The apparatus of claim 6, wherein the second multi-carrier transmitter receives the combined multi-carrier signal from the combiner, and the second multi-carrier transmitter compensates a phase of the second multi-carrier signal based on a phase difference between the combined multi-carrier signal and the second multi-carrier signal.

8. The apparatus of claim 7, wherein the second multi-carrier transmitter includes a Direct Digital Synthesizer (DDS) to compensate the phase of the second multi-carrier signal based on the phase difference.

9. The apparatus of claim 6, further comprising:

a first power amplifier to receive the first multi-carrier signal and to amplify a power of the received first multi-carrier signal; and
a second power amplifier to receive the second multi-carrier signal and to amplify a power of the received second multi-carrier signal,

wherein the combiner combines the amplified first multi-carrier signal and the amplified second multi-carrier signal to provide a combined multi-carrier signal, and the second multi-carrier transmitter operates such that the amplified second multi-carrier signal and the combined multi-carrier signal have the same phase.

**10.** The apparatus of claim 9, wherein the second multi-carrier transmitter receives the combined multi-carrier signal from the combiner and receives the amplified second multi-carrier signal from the second power amplifier, and the second multi-carrier transmitter compensates a phase of the second multi-carrier signal based on a phase difference between the combined multi-carrier signal and the amplified second multi-carrier signal.

**11.** A method of transmitting a multi-carrier signal generated by modulating a received digital signal, comprising:

modulating the received digital signal to generate a first multi-carrier signal and a second multi-carrier signal;
combining the first multi-carrier signal and the second multi-carrier signal to provide a combined multi-carrier signal; and
compensating a phase of the first multi-carrier signal or the second multi-carrier signal such that the second multi-carrier signal and the combined multi-carrier signal have a same phase.

**12.** The method of claim 11, wherein compensating the phase of the first multi-carrier signal or the second multi-carrier signal includes compensating the phase of the second multi-carrier signal by using a phase difference between the combined multi-carrier signal and the second multi-carrier signal.

**13.** The method of claim 12, wherein compensating the phase of the first multi-carrier signal or the second multi-carrier signal includes compensating the phase of the second multi-carrier signal using a direct digital synthesizer (DDS) that receives the phase difference.

**14.** The method of claim 11, further comprising:

amplifying a power of the first multi-carrier signal and the second multi-carrier signal to a predetermined level, wherein combining the first multi-carrier signal and the second multi-carrier signal includes combining the amplified first multi-carrier signal and the amplified second multi-carrier signal to provide the combined multi-carrier signal, and
compensating the phase of the first multi-carrier signal or the second multi-carrier signal includes compensating the phase of the second multi-carrier signal such that the amplified second multi-carrier signal and the combined multi-carrier signal have the same phase.

**15.** The method of claim 14, wherein compensating the phase of the second multi-carrier signal includes compensating the phase of the second multi-carrier signal by using a phase difference between the combined multi-carrier signal and the amplified second multi-carrier signal.

**16.** A machine-readable medium having stored thereon data representing sequences of instructions, when executed by a processor, cause the processor to perform operations comprising:

modulating the received digital signal to generate a first multi-carrier signal and a second multi-carrier signal;
combining the first multi-carrier signal and the second multi-carrier signal to provide a combined multi-carrier signal; and
compensating a phase of the first multi-carrier signal or the second multi-carrier signal such that the second multi-carrier signal and the combined multi-carrier signal have a same phase.

**17.** The medium of claim 16, wherein compensating the phase of the first multi-carrier signal or the second multi-carrier signal includes compensating the phase of the second multi-carrier signal by using a phase difference between the combined multi-carrier signal and the second multi-carrier signal.

**18.** The medium of claim 17, wherein compensating the phase of the second multi-carrier signal includes compensating the phase of the second multi-carrier signal by using a direct digital synthesizer (DDS) that receives the phase difference.

**19.** The medium of claim 16, wherein the sequences of instructions cause the processor to perform operations that further comprise:

amplifying a power of the first multi-carrier signal and the second multi-carrier signal to a predetermined level, wherein combining the first multi-carrier signal and the second multi-carrier signal includes combining the amplified first multi-carrier signal and the amplified second multi-carrier signal to provide a combined multi-carrier signal, and

compensating the phase of the first multi-carrier signal or the second multi-carrier signal includes compensating the phase of the second multi-carrier signal such that the amplified second multi-carrier signal and the combined multi-carrier signal have the same phase.

20. The medium of claim 19, wherein compensating the phase of the second multi-carrier signal includes compensating the phase of the second multi-carrier signal by using a phase difference between the combined multi-carrier signal and the amplified second multi-carrier signal.

FIG. 1

<u>100</u>

110A single-carrier transmitter

110B single-carrier transmitter

120A combiner

110C single-carrier transmitter

110D single-carrier transmitter

120B combiner

130 first unified combiner

140 lossless divider

150A power amp

150B power amp

160 second unified combiner

170 duplexer filter

180

EP 1 802 060 A2

FIG. 2

# FIG. 3

EP 1 802 060 A2

# FIG. 4

START

receive a digital signal to generate a
first and a second multi-carrier signal          410

combine the first and second multi-carrier signal
for each carrier
to generate a combined multi-carrier signal      420

detect a phase difference for each carrier
between the combined multi-carrier signal
and the second signal before combining           430

generate
a phase compensated second multi-carrier signal   440
by using the detected phase differences

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 102005129328